Europäisches Patentamt

(19) European Patent Office

Office européen des brevets

(11) Publication number: **0 142 913 B1**

# EUROPEAN PATENT SPECIFICATION

(45) Date of publication of patent specification: 27.03.91  (51) Int. Cl.⁵: **G06F 7/52**

(21) Application number: 84305734.0

(22) Date of filing: 22.08.84

(54) **Signed multiplier.**

(30) Priority: 24.08.83 US 526106

(43) Date of publication of application:
29.05.85 Bulletin 85/22

(45) Publication of the grant of the patent:
27.03.91 Bulletin 91/13

(84) Designated Contracting States:
**DE FR GB IT**

(56) References cited:

Y.CHU: DIGITAL COMPUTER DESIGN FUN-
DAMENTALS, pages 24-35, McGRAW-HILL,
New York, US, 1962

IBM TECHNICAL DISCLOSURE BULLETIN, vol.
25, no. 7A, December 1982, pages 3549-3552,
New York, US; D.N.GOODING et al.: "High
speed signed binary multiplication"

RADIO FERNSEHE ELEKTRONIK, vol. 32, no.
8, August 1983, pages 487-490, East Berlin,
DDR; F.MARKERT: "Schnelle Arithmetik für
Mikrorechner"

IBM TECHNICAL DISCLOSURE BULLETIN, vol.
18, no. 5, October 1975, pages 1482-1483,

New York, US; A.DAUBY et al.: "Two's com-
plement multiplier"

(73) Proprietor: **AMDAHL CORPORATION**
**1250 East Arques Avenue**
**Sunnyvale California94086(US)**

(72) Inventor: **Lee, Hsiao-Peng Sherman**
**1131 Timberpine Ct.**
**Sunnyvale California 94086(US)**
Inventor: **Oneto, John Clarence**
**1143 Paula Drive**
**Campbell California 95008(US)**
Inventor: **Rawlinson, Stephen John**
**125-62 Connemara Way**
**Sunnyvale California 94087(US)**

(74) Representative: **Crawford, Andrew Birkby et al**
**A.A. THORNTON & CO. Northumberland**
**House 303-306 High Holborn**
**London WC1V 7LE(GB)**

## Description

The present invention relates to 2's complement signed multipliers for use in data processing systems.

Low performance computers frequently perform multiplication by a sequence of additions using an adder. Such an approach takes many cycles of operation and thus is slow. High performance computers cannot tolerate long routines for multiplication. Therefore, high performance data processing systems generally include special functional units and/or special high speed routines to handle multiplication.

In multiplication, multipliers and multiplicands can both be positive and negative. Frequently, 2's complement form is employed to accommodate negative numbers. There are many ways to design multipliers to handle 2's complement multipliers and multiplicands. In one approach, the signs of both operands (multiplier and multiplicand) can be checked prior to commencing the multiplication. Depending upon the signs of the operands, the appropriate multiplication routine is executed to give the correct, final product. While such a method is satisfactory for many applications, it has the detriment that the multiplication routine cannot commence until after the signs have been checked. Such a procedure always requires a delay before the multiplication commences and such a delay is wasteful of processing time. In another approach, sign extension hardware is used which operates in parallel with other multiplication hardware thereby avoiding extra processing time. The sign extension hardware, however, has the detriment of adding extra cost and complexity to the computer.

A number of algorithms for the execution of binary multiplication is disclosed in Y. Chu: "Digital Computer Design Fundamentals", pp.24-35, McGraw-Hill (1962). A first approach to binary multiplication disclosed is repeated addition. This approach is subdivided into six methods, one of the methods being the Burks-Goldstine-Von Neumann Method. This method multiplies binary numbers in signed-2s-complement representation. In this method, both the multiplier X and the multiplier Y are represented by an unsigned number $(X^*,Y^*)$ plus a sign bit $(X_o, Y_o)$. The method forms a product of the unsigned numbers $X^*Y^* = (X + X_o)(Y + Y_o) = XY + X_oY + Y_oX + X_oY_o$. The desired product XY is obtained by applying a correction ($-Y_oX, -X_oY$ or $- [ X_oY + Y_oX + X_oY_o ]$) depending on the values of $X_o$ and $Y_o$ - i.e. whether the multiplier, multiplicand, or both, are negative. There is no correction if both X and Y are positive.

In accordance with the above background, there is a need for an improved multiplier and method of multiplication in a data processing system which avoids the extra cost required with sign extension hardware and which avoids the delays required for sign checking prior to the time that multiplication begins.

It is a feature of the present invention that the adjustment process occurs as part of the multiplication process and adds only a single cycle to the processing time. According to the prior art, the adjustment process was carried out as an independent arithmetic operation after completion of the multiplication.

In general, multipliers for high-performance systems must be able to multiply relatively large operands. For example, a typical multiplier should be large enough to multiply 32-bit signed operands to form a 64-bit signed product, and to multiply 56-bit unsigned operands to form 112-bit unsigned products. However, the physical size of the multiplier must be minimized, by taking advantage, for example, of hardware provided for other purposes.

The present invention provides an apparatus for multiplying a first operand having a sign by a second operand having a sign, in 2's complement form, to provide a final product, comprising:

a first register for storing the first and second operands;

a second register for storing the second operand;

means, coupled to the first register, for generating complements of said operands;

means, coupled to the first register and the second register to receive the first operand and an increment of the second operand, for multiplying the first operand by the increment of the second operand to generate a partial sum output and a partial carry output;

third register means, coupled to the means for multiplying, for storing the partial sum output and the partial carry output;

a result register;

three port adder means having a first port, a second port and a third port, for adding data received at the first, second and third ports to generate a resulting sum and supplying the resulting sum to the result register,

the first port, second port and third port connected to receive in any given machine cycle up to three of the following data: the partial sum output from the third register, the partial carry output of the third register, the first operand, the complement of the first operand, the second operand, the complement of the second operand, the contents of the result register or zero;

control means, coupled to the means for multiplying and the three port adder means, for controlling the means for multiplying and the three port adder means to successively generate partial sum and carry outputs and to add the partial sum and carry outputs to the contents of the result register to generate preliminary products in said result register, to which preliminary products adjustments may be added to form partial products in said result register,until a final partial product is generated; and

adjustment means, responsive to the sign of the first operand and of the second operand for generating an adjustment while multiplication is in progress, said adjustment being determined by a first condition (C2) in which the first operand is positive and the second operand is negative, a second condition (C3) in which the first operand is negative and the second operand is positive, and a third condition (C4) in which both the first and second operands are negative, said adjustment being added to a said preliminary product in the result register to form a said partial product; wherein said adjustment means includes,

means, responsive to the first condition (C2), for controlling the adder means to add the complement of the first operand to the high order bits of said preliminary product,

means, responsive to the second condition (C3), for controlling the adder means to add a multiple of the complement of the second operand to said preliminary product, and

means, responsive to the third condition (C4), for controlling the adder means to add a multiple of the complement of the second operand to said preliminary product and to add the complement of the first operand to the high order bits of said preliminary product.

In the present invention a three-port adder is employed to add simultaneously three terms as part of the multiplication. When both operands are negative, the three-port adder simultaneously adds two correction factors to the preliminary product in order to form the final product.

The present invention achieves the objective of providing an improved multiplier and method for multiplying which has improved speed of multiplication and which does not require sign extension hardware.

The foregoing and other objects, features and advantages of the invention will be apparent from the following detailed description set forth in conjunction with the accompanying drawings.

FIG. 1 depicts a block diagram of the signed multiplier of the present invention.

FIG. 2 depicts a control unit comprising a dual microprogram control store which forms part of the FIG 1 apparatus.

FIG. 3 depicts a block diagram of the operand processing unit of FIG. 1.

FIG. 4 depicts a detailed block diagram of the signed multiplier unit of FIG. 1.

Detailed Description

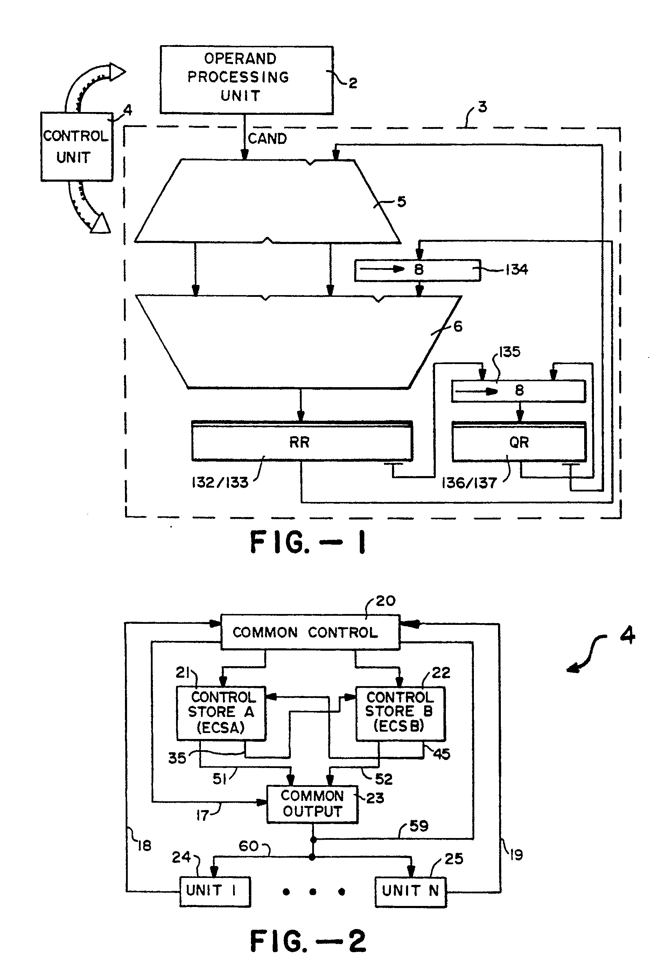

Signed Multiplier - FIG. 1

In FIG. 1, a signed multiplier for use in a data processing system is shown. The signed multiplier includes the operand processing unit 2, the multiplier unit 3 and a control unit 4. The control unit 4 can be any conventional control unit for controlling operations of hardware in a data processing system. Typically, control unit 4 is a microprogram unit which operates to control multiplication by microprogram routines. In FIG. 1, the operands to be multiplied are supplied by the operand processing unit 2 to the multiplier unit 3. In one embodiment described, the multiplier unit 3 includes a high-speed multiplier 5 and a three-port adder 6.

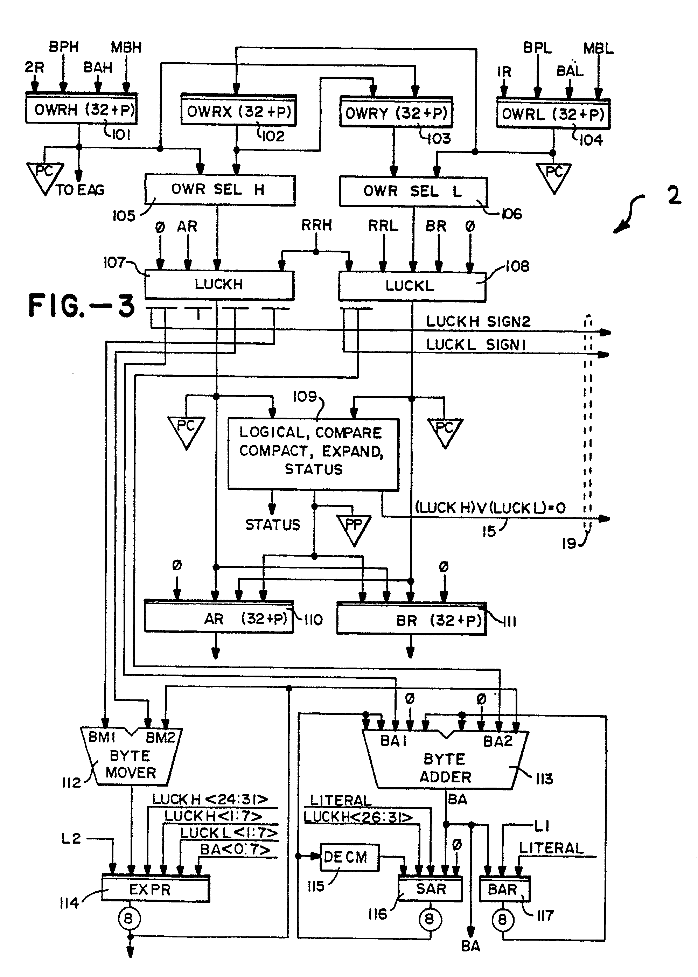

Control Unit - FIG. 2

In FIG. 2, the control unit 4 of FIG. 1 is shown. Typically unit 4 has two or more control stores including the E CONTROL STORE A (ECSA) 21 and the E CONTROL STORE B (ECSB) 22. The control stores 21 and 22 each store microinstructions and are initiated and controlled by a common control 20. Microinstructions are selected by a common output 23 for controlling units in a data processing system. The units 24 and 25 in FIG. 2 are typical units and, for example, can be the processing unit 2 and the multiplying unit 3 of FIG. 1. The control unit of FIG. 2, in one typical embodiment, is like that described in the application entitled, MULTIPLE MODULE CONTROL STORE FOR USE IN A DATA PROCESSING SYSTEM, Serial No. 184,126, filed on September 4, 1980 and assigned to the assignee of the present invention.

In FIG. 2, the A control store 21 provides microinstruction control words on bus 51 to the common output 23. Similarly, the B control store 22 provides microinstruction control words on bus 52 to the common output 23. The common output 23 selects a control word from either bus 51 or from bus 52 for controlling the units 24 and 25. The A control store 21 and the B control store 22 each provide control

3

words on buses 51 and 52 for each machine cycle.

Each cycle, the A control store 21 also provides a branch address on bus 35 to the B control store 22. Similarly, each cycle, the B control store 22 provides a branch address on bus 45 to the A control store 21. Each cycle, the common control 20 determines for both the A and B control stores 21 and 22 whether the branch address from the other control store or the sequential address is to be selected. The sequential address is the address of the next instruction in sequence. The common control 20 receives on lines 59 an indication from the common output 23 whether or not a branch is specified by the current control word. Common control 20 senses via lines 18 and 19 the state of branch conditions within the controlled units 24 and 25 and decides whether or not any branch is to be taken. The common control 20, via lines 17, controls the common output 23 to select the microinstruction control word from the A or B control stores 21 or 22. This selected control word controls the state of the units 24 and 25.

In one embodiment, the common control contains latches which control the signed multiplier (not shown) and these latches include SIGN1-TRIGGER, SIGN2-TRIGGER, and ZERO-TRIGGER. The outputs of these latches assist in the determination of whether or not a branch should be taken. Common output 23 sends signals along lines 59 to common control 20 to determine which, if any, of these latches should be tested.

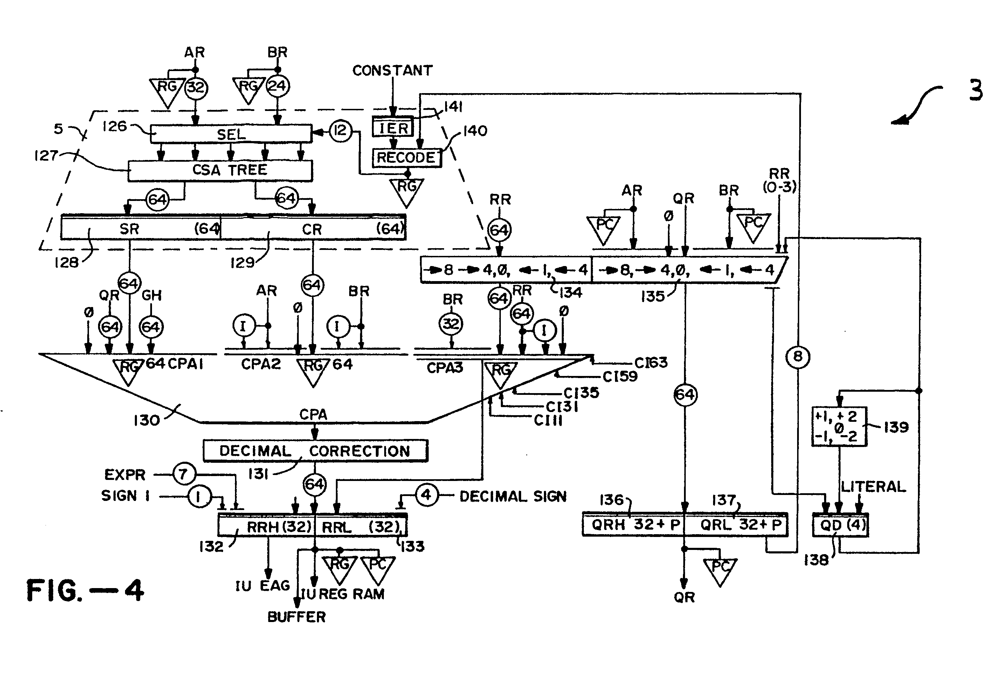

## Operand Processing Unit - FIG. 3

In FIG. 3, apparatus useful in carrying out a fixed-point multiply operation within a data processing system is shown.

In FIG. 3, four 32-bit operand word registers 101, 102, 103 and 104 are provided for storing operands which are to be processed in accordance with instructions from microprogram control stores. Registers 101 and 102 provide input to the operand word register selector 105 and registers 103 and 104 provide inputs to the operand word register selector 106. Selector 105 selects an input for the LUCKH selector 107 and selector 106 provides an input to the LUCKL selector 108. The LUCKH SIGN2 line from selector 107 indicates the sign of the operand 2 selected by the selector 107. The LUCKL SIGN1 line from selector 108 indicates the sign of the operand 1 selected by the selector 108. Selectors 107 and 108 select the operands to provide inputs to the LUCK unit 109, to the A register (AR) 110 and to the B register (BR) 111. Both the AR and BR are 32 bits wide.

In FIG. 3, operands 1 and 2 from the selectors 108 and 107 are operated upon by unit 109 which performs logical, compare, compact, expand, and status operations. While such operations are conventional, they are not all required for the particular example being described. For the purpose of the present invention, unit 109 detects whether or not either the operand 1 from the LUCKL selector 108 or the operand 2 from the LUCKH selector 107 is equal to ZERO to provide a branch condition indication on the (LUCKH) v (LUCKL) = 0 line 15.

In FIG. 3, a byte mover 112 selects one byte (8 bits) from the selectors 107 or 108 and moves it to appropriate locations in the data processing system. To perform additions, the byte adder 113 receives inputs from the selectors 107 and 108, shift amount register (SAR) 116, or the byte adder register (BAR) 117. The decrementor 115 is provided to decrement the contents of SAR register 116. None of the units of this paragraph except SAR are necessary for a signed multiply operation and hence can be ignored. The SAR register 116 is loaded with a shift amount to control shifter 134 and 135 of FIG. 4.

## Multiply Unit - FIG. 4

In FIG. 4, selector 126 is provided for selecting the recoded copies of the operand from the AR register 110 and the BR register 111 from FIG. 3 under the control of the recode unit 140. The recoded copies of the operands are input to a carry-save adder tree 127. Outputs from the carry-save adder tree 127 are stored in a 64-bit SR register 128 and a 64-bit CR register 129. The output of the SR register 128 forms one input to a carry propagate adder (CPA) 130. The output from the CR register 129 provides a second input to the carry propagate adder 130. A shifter 134 shifts the contents of the result register 132/133 to form a third input to the carry propagate adder 130. In FIG. 4, the registers 128, 129, and 141, the recoder 140, the selector 126 and the CSA tree 127 constitute the multiplier 5 of FIG. 1. The multiplier works together with the 3-port adder and the other hardware shown in FIG. 4 to perform multiplications. The quotient register 136/137 is loaded by a quotient shifter 135.

The quotient shifter shifts inputs from the AR register 110 and the BR register 111 of FIG. 3, or from the quotient register 136/137. Hardware also exists in FIG. 4 to perform functions not related to multiplication. Various other control and data are indicated in connection with the FIG. 3 and FIG. 4 apparatus. Registers are represented by boxes with heavy bars at the top and such registers are clocked at the end of each machine cycle by a clock signal.

## Description of the Unsigned Multiplication Process

The basic hardware in FIGS. 3 and 4 includes a 56 x 8 bit multiplier 5, a 64-bit 3-port adder 130, a pair of registers (AR 110 and BR 111) to hold the multiplicand, a pair of registers (SR 128 and CR 129) to hold the output of the multiplier, a RR register (RRH 132 and RRL 133) to hold the partial product and the final result, and a QR register (QRH 136 and QRL 137) to hold the multiplier operand and the low-order part of a product that is longer than 64 bits. RR and QR also hold the adjustment terms if the operands are negative numbers.

The multiplier hardware uses the entire multiplicand (56 bits) along with the low-order 8 bits of the multiplier operand to form a 64-bit partial sum and a 64-bit partial carry which when added together form a partial product. While this operation is going on, QR is shifted 8 bits to the right so that the next 8 bits of the multiplier operand will be available for the next multiplication.

While the second multiplication is taking place, the partial sum and partial carry from the first multiplication are added together to form the first partial product. While the third multiplication is taking place, the partial product of the first multiplication is shifted to the right by 8 bits with the least significant 8 bits being shifted into QR and the remaining 56 bits being added together with the partial sum and partial carry of the second multiplication. This process continues until the partial sum and partial carry of the final multiplication are added together with the partial product of the previous multiplications.

In TABLE 1, a 56 x 56 unsigned multiplication is described. In TABLE 1 and TABLE 2, the symbol "-:" has the same meaning as the symbol "->" in TABLE 3 and they mean that the operand location on the right receives the data from the operand location on the left.

## TABLE 1

### Steps to Perform Unsigned 56 x 56 Multiplication

1.  Multiplier -: AR(8:31) BR(0:31)

                0 -: AR(0:7)

2.  AR, BR  -: QRSH -: QR

                No shift

    Multiplicand  -: AR(0:31), BR(0:23)

                0 -: RR

3.  QR(56:63)  -: IER

    AR(0:31), BR(0:23) -: CAND         Form first SUM, CARRY

    Multiply Results -: SR, CR

    QR  -: QRSH -: QR

    Shift right 8

4.  SR  -: CPA1

    CR  -: CPA2        Form first partial product

    RR  -: RRSH -: CPA3

    CPA -: RR

    QR (56:63)  -: IER

    AR (0:31), BR (0:23)  -: CAND       Form second SUM, CARRY

    Multiply Result  -: SR, CR

    QR  -: QRSH -: QR

    Shift right 8

5,6,7,8,9    Repeat (4) to form third to seventh SUM, CARRY

             and second to sixth partial products.


10. SR    -: CPA1

    CR    -: CPA2       Final 112-bit product is

    RR    -: RRSH -: CPA3    in RR (0:63), QR (0:47)

    CPA   -: RR

    Shift right 8

    EXIT


Mathematics of Signed 32 x 32 Multiplication

Multiplication of signed numbers with negative numbers in 2's complement form consists of unsigned multiplication to form a preliminary product followed by an adjustment to form the final product. There are four cases C1, C2, C3 and C4 in which C2, C3 and C4 require adjustment.

   C1.    Multiplicand positive, multiplier positive (No adjustment)

6

C2.  Multiplicand positive, multiplier negative

C3.  Multiplicand negative, multiplier positive

C4.  Multiplicand negative, multiplier negative

In 2's complement notation, the highest-order bit for negative numbers is "1" and that for positive numbers is "0". For a 32-bit number, the positive numbers range from 0 to $(2^{31}-1)$. For a 32-bit number, the absolute value of the negative numbers range from 1 to $(2^{31})$. For 32-bit operands, a negative number $(-Q)$, where Q is positive between 1 and $2^{31}$, is represented by the 2's complement notation $[2^{32} - Q]$. If a negative number in 2's complement form, $[2^{32} - Q]$, is again 2's complemented, the positive value $Q = 2^{32} - [2^{32} - Q]$ is obtained.

## C2. Adjustment for Multiplicand (OP1] Positive And Multiplier (OP2) Negative

Let the positive multiplicand equal $[A]$. Let the negative multiplier equal $[2^{32} -Q]$ where A and Q are greater than 0. The desired 64-bit final product is $-(A)(Q)$ which in 2's complement notation is $[2^{64} - AQ]$.

The preliminary product obtained from unsigned multiplication of the negative multiplier $[2^{32} - Q]$ and the positive multiplicand, A, is $(2^{32}) (A) - (A)(Q)$.

The adjustment which must be added to the preliminary product to form the final product is the quantity $[2^{64} - (2^{32}) (A)]$ or $(2^{32}) [2^{32} - A]$.

This adjustment is achieved by adding the 2's complement, $[2^{32} - A]$, of the 32-bit operand A, in register AR, to the high-order bits 0:31 of the preliminary product in RR.

Since $[2^{32} - A]$ is added to the high-order bits, it is effectively multiplied by $2^{32}$ so that the added value is the desired adjustment, $(2^{32} )[2^{32} - A]$.

## C3. Adjustment for Multiplicand Negative, Multiplier Positive

Let the negative multiplicand equal $[2^{32} - A]$.

Let the positive multiplier equal Q where A and Q are greater than 0. The desired product is $[2^{64} - (A)-(Q)]$.

The preliminary product obtained from unsigned multiplication is $(2^{32})(Q) - (A)(Q)$.

The adjustment which must be added to the preliminary product to form the final product is the quantity $[2^{64} - (2^{32}) (Q)]$ or $(2^{32}) [2^{32} - Q]$.

This adjustment is achieved by loading the 2's complement, $[2^{32} - Q]$, of Q into the low-order bits of register RR (32:63) at the start of the multiplication. At the same time, zero is loaded into the high-order bits of QR (0:31). As the multiplication proceeds, the 2's complement of Q, $[2^{32} - Q]$, shifts right until it ends up in the high-order bits of QR (0:31) thereby multiplying $[2^{32} - Q]$ by $2^{32}$ and forming the adjustment $[2^{64} - (2^{32})Q]$ in register QR. At this time, zero is in the low-order bits QR (32:63). The adjustment is completed by adding the adjustment in QR to the preliminary product in RR.

## C4. Adjustment for Multiplicand Negative, Multiplier Negative

Let the negative multiplicand equal $[2^{32} - A]$.

Let the negative multiplier equal $[2^{32} - Q]$ where A and Q are greater than 0. The desired product is $(A)-(Q)$.

The product obtained from unsigned multiplication is $[2^{32} - A] [2^{32} - Q]$ or $[2^{64} - (2^{32}) (A)] - (2^{32}) (Q) + (AQ)$ The adjustment which must be added to the preliminary product to form the final product is the quantity $(2^{32} )(A) + (2^{32})(Q)$.

This adjustment is achieved by loading the 2's complement of $[(2^{32} -Q)]$, the multiplier, into RR (32:63) at the start of the multiplication. At the same time, zero is loaded into QR (0:31), and multiplicand $[2^{32} -A]$ is loaded into AR. As the multiplication proceeds, Q shifts right until it ends up in QR (0:31) thereby forming $(2^{32})(Q)$. At this time, zero is in QR (32:63] and $[2^{32} -A]$ is still in AR. The adjustment is completed by adding QR to RR and by subtracting $[2^{32} - A)$ in AR from RR (0:31]. The subtraction is implemented by gating the 1's complement of $[2^{32}-A]$ in AR into the adder and adding $+1$ to form the 2's complement, $+A$. The 2's complement, $+A$, is added to the high-order bits RR (0:31) and hence is effectively $(2^{32})(A)$. This adjustment is done in one step with the three-port adder.

The apparatus of FIGS. 3 and 4 is typically used to perform a high-speed multiply. In a fixed-point multiplication, the product of the multiplier (the second operand) and the multiplicand (the first operand) is found and replaces the original multiplicand. The multiplicand and the multiplier typically are x-bit operands and the product is a 2x-bit operand. The final product is formed in each case by adding one or two adjustment factors to an unsigned preliminary product. The adjustment for each negative operand is equal to $2^x$ times the other operand.

A 32 x 32 fixed-point multiply operation is carried out in accordance with the microprogram summarized in the following TABLE 2.

## TABLE 2

## Fixed Point Steps to Perform Signed 32 x 32 Multiply

```
$1.   Multiplicand -: AR
      Multiplier   -: BR
      Test for either operand to be zero
      (This test allows for quick completion if the product
      is zero.)
```

```
$2.   0, BR -: QRSH -: QR
            No shift
            0 -: CPA1
            0 -: CPA2H
       BR_INV -: CPA2L
            0 -: CPA3
            1 -: Adder_Carry In (Bit 63)
            CPA -: RR (Zero is in RR (0:31) if multiplier
                     nonzero)
            0 -: BR
            Branch to (8) if either operand is zero


$3.   QR (56:63) -: IER
      AR (0:31), BR (0:23) -: CAND   Form first SUM, CARRY
      Multiply result -: SR, CR
      QR -: QRSH -: QR
      Shift right 8


$4.   SR -: CPA1
      CR -: CPA2                      Form first partial product
      RR -: RRSH -: CPA3
      CPA -: RR
      QR (56:63) -: IER
      AR (0:31), BR (0:23) -: CAND  Form second SUM, CARRY
      Multiply result -: SR, CR
      QR -: QRSH -: QR
      Shift right 8
```

```
$5.    SR -: CPA1
       CR -: CPA2                    Form second partial product
       RR -: RRSH -: CPA3
       CPA -: RR
       QR (56:63) -: IER
       AR (0:31), BR (0:23) -: CAND  Form third SUM, CARRY
       Multiply results -: SR, CR
       QR -: QRSH -: QR
       Shift right 8
       Branch to (10) if either operand negative


$6.    SR -: CPA1
       CR -: CPA2                    Form third partial product
       RR -: RRSH -: CPA3
       CPA -: RR
       QR (56:63) -: IER
       AR (0:31), BR (0:23) -: CAND  Form fourth SUM, CARRY
       Multiply result -: SR, CR
       QR -: QRSH -: QR
       Shift right 8


$7.    SR -: CPA1
       CR -: CPA2                    Form the final product
       RR -: RRSH -: CPA3
       CPA -: RR
       Shift right 8
       EXIT


$8.    0 -: CPA1
       0 -: CPA2
       0 -: CPA3
       CPA -: RR
       EXIT
```

```
$10. SR -: CPA1
     CR -: CPA2                    Form third partial product
     RR -: RRSH -: CPA3
     CPA -: RR
     QR (56:63) -: IER
     AR (0:31), BR (0:23) -: CAND  Form fourth SUM, CARRY
     Multiply result -: SR, CR
     QR -: QRSH -: QR
     Shift right 8
     Branch to (15) if multiplier operand negative


$11. SR -: CPA1
     CR -: CPA2                    Form fourth partial product
     RR -: RRSH -: CPA3
     CPA -: RR
     Shift right 8
     Hold QR


$12. QR -: CPA1
     0 -: CPA2                     Adjust
     RR -: CPA3
     CPA -: RR
     EXIT


$15. SR -: CPA1
     CR -: CPA2                    Form fourth partial product
     RR -: RRSH -: CPA3
     CPA -: RR
     Shift right 8
     Hold QR
     Branch to (18) if multiplicand negative
```

```
$16.  0 -: CPA1
      AR_INV -: CPA2H
      All Ones -: CPA2L              Adjust
      RR -: CPA3
      1 -: Adder Carry In (Bit 63)
      CPA -: RR
      EXIT


$18.  QR -: CPA1
      AR_INV -: CPA2H
      All Ones -: CPA2L              Adjust
      RR -: CPA3
      1 -: Adder Carry In (Bit 63)
      CPA -: RR
      EXIT
```

A detailed microprogram for implementing the TABLE 2 summary is set forth in the following TABLE 3.

## TABLE 3

```
                    /* MR, M -- 5C */                                    */
/* MULTIPLY (FIXED-POINT)                                                */
/*                                                                       */
/* MNEMONICS:  MR, M                                                     */
/* OP CODES:   1C, 5C                                                    */
/* FORMAT:  RR, RX                                                       */
/* OPERATION:  THE PRODUCT OF THE MULTIPLIER (THE SECOND OPERAND)        */
/*    AND THE MULTIPLICAND (THE FIRST OPERAND) REPLACES THE              */
/*    MULTIPLICAND.  THE MULTIPLICAND AND MULTIPLIER ARE 32-BIT          */
/*    OPERANDS; THE PRODUCT IS A 64-BIT OPERAND.                         */
/* CONDITION CODE:  UNCHANGED                                            */
/*                                                                       */
/* FLOW:                                                                 */
/*                        (EITHER FACTOR ZERO)                           */
/*    START --> $1 --> $2A ------------------------> $8B ---> NULL        */
/*                                                          |            */
/*          (BOTH FACTORS)|                                 |            */
/*          (  NONZERO  ) |                                 V            */
/*                        |                               EXIT           */
/*                        V                                              */
/*          $4A <-- $3A                                                  */
/*              |                                                        */
/*              |   ( EITHER )          ( OP2  )      (  BOTH  )          */
/*              |   ( FACTOR )         (NEGATIVE)     ( FACTORS)          */
/*              V   (NEGATIVE)                        (NEGATIVE)          */
/*          $5A ----------> $10B ----------> $15A ----------> $18B       */
/*              |               |                |                |      */
/*          ( BOTH  )|        (OP2)|          (OP1)|              |      */
/*          ( FACTORS)|       ( + )|          ( + )|              V      */
/*          (POSITIVE)|           |               |            EXIT     */
/*              V           V               V                            */
/*          $6A          $11B            $16A                            */
/*              |               |                |                       */
/*              |               |                V                       */
/*              V           V               EXIT                         */
/*          $7A          $12B                                            */
/*              |               |                                        */
/*              |               |                                        */
/*              V           V                                            */
/*          EXIT          EXIT                                           */
/*                                                                       */
```

## TABLE 3, cont.

```
                    /* MR, M -- 5C */
/* PIPELINE SEQUENCE:                                                    */  45
/*                                                                       */  46
/*        G B L E E - - - - E E E W WD                                   */  47
/*          |------EUBI-----|                                            */  48
/*                                                                       */  49
/* CONTROL-STORE REQUIREMENT:       ECSA = 8                             */  50
/*                                  ECSB = 5                             */  51
/*                                  --------------                       */  52
/*                               TOTAL ECS = 13                          */  53
/*                                                                       */  54
/* TIMING:     CYCLE-TIME = 3 + NZ*(3 + NEG)                             */  55
/*                                                                       */  56
/*             WHERE NEG = 1 IF EITHER FACTOR IS NEGATIVE                */  57
/*                   NZ = 1 IF BOTH FACTORS ARE NONZERO                  */  58
/*                                                                       */  59
/*             FACTOR      FACTOR      NUMBER OF CYCLES                  */  60
/*             --------    --------    -----------------                 */  61
/*             POSITIVE    POSITIVE          6                           */  62
/*             POSITIVE    NEGATIVE          7                           */  63
/*             NEGATIVE    POSITIVE          7                           */  64
/*             NEGATIVE    NEGATIVE          7                           */  65
/*                0        (ANYTHING)        3                           */  66
/*                                                                       */  67
/*                                                                       */  68
```

## TABLE 3, cont.

```
                    /* MR, M -- 5C */

BEGIN MR;

CSECT LCS;

ORIGIN '5C'X;

EUMR:  EUM:    $1;
       OWRH -> OWRSELH,
       OWRL -> OWRSELL,
       OWRSELH -> LUCKH,      /* OP2 */
       OWRSELL -> LUCKL,      /* OP1 */
       LUCKH_SIGN -> SIGN2_TRIGGER,
       LUCKL_SIGN -> SIGN1_TRIGGER,
       0 -> SAR,
       LUCKH -> BR,           /* OP2 */
       LUCKL -> AR,           /* OP1 */
       IF LUCKH=0 OR LUCKL=0 THEN 1 ELSE 0 ENDF -> ZERO_TRIGGER,
       1 -> TEST_DATA_VALID,
       ECSA -> CONTROL_STORE,
       $2A -> ECS_ADDR;

CSECT ECSA;

S2A:   0 -> BR,               /* OP1 IN AR, 0 IN BR */
       (0/(0..31),BR/(32..63)) -> QRSH,
       QRSH -> QR,            /* 0 -> QRH, OP2 -> QRL */
       0 -> CPA1,
       (0/(0..31),BR_INV/(32..63)) -> CPA2,
       0 -> CPA3,
       HOT_CARRY_63 -> ADDER_CARRY_IN,
       CPA -> RR,             /* 0 -> RRH, OP2 INVERTED -> RRL */
          /* NOTE:  IF OP2 NOT ZERO, THEN THERE IS NO CARRY INTO RRH */
          /*        IF OP2 IS ZERO, WE DON'T CARE WHAT GOES INTO RR  */
       B -> SAR,
       ZERO_TRIGGER -> BRANCH,
       $8B -> BRANCH_ADDRESS;
```

## TABLE 3, cont.

```
                          /* MR, M -- 5C */
     S3A:  0 -> CPA1,                    /* 1ST MULTIPLY */
           0 -> CPA2,
           RRSH -> CPA3,                 /* OP1 IN AR, 0 IN BR */
           CPA -> RR,                    /* 0 -> RR(0..39) */
           QR(56..63) -> IER_RECODE,     /* OP2 COMPLEMENTED ->        */
           QR -> QRSH,                   /*       RR(40..63), QR(0..7) */
           QRSH -> QR,                   /* 0 -> QR(8..39) */
           RRSH -> QR_SHIFT_IN,          /* OP2(0..23) -> QR(40..63) */
           RIGHT -> SHIFT_DIRECTION,
           LOGICAL -> SHIFT_TYPE;

     S4A:  SR -> CPA1,                    /* 2ND MULTIPLY, 1ST ADD */
           CR -> CPA2,                    /* OP1 IN AR, 0 IN BR */
           RRSH -> CPA3,                  /* PARTIAL PRODUCT -> RR(0..39) */
           CPA -> RR,                     /* 0 -> RR(40..47) */
           QR(56..63) -> IER_RECODE,      /* OP2 COMPLEMENTED ->        */
           QR -> QRSH,                    /*       RR(48..63), QR(0..15) */
           QRSH -> QR,                    /* 0 -> QR(16..47) */
           RRSH -> QR_SHIFT_IN,           /* OP2(0..15) -> QR(48..63) */
           RIGHT -> SHIFT_DIRECTION,
           LOGICAL -> SHIFT_TYPE;

     S5A:  SR -> CPA1,                    /* 3RD MULTIPLY, 2ND ADD */
           CR -> CPA2,                    /* OP1 IN AR, 0 IN BR    */
           RRSH -> CPA3,                  /* PARTIAL PRODUCT -> RR(0..47) */
           CPA -> RR,                     /* 0 -> RR(48..55) */
           QR(56..63) -> IER_RECODE,      /* OP2 COMPLEMENTED ->        */
           QR -> QRSH,                    /*       RR(56..63), QR(0..23) */
           QRSH -> QR,                    /* 0 -> QR(24..55) */
           RRSH -> QR_SHIFT_IN,           /* OP2(0..7) -> QR(56..63)    */
           RIGHT -> SHIFT_DIRECTION,
           LOGICAL -> SHIFT_TYPE,
           SIGN1_TRIGGER | SIGN2_TRIGGER -> BRANCH,
           S10B -> BRANCH_ADDRESS;


                     /* BOTH OPERANDS ARE POSITIVE */
     S6A:  SR -> CPA1,                    /* 4TH MULTIPLY, 3RD ADD */
           CR -> CPA2,
           RRSH -> CPA3,                  /* OP1 IN AR, 0 IN BR */
           CPA -> RR,                     /* PARTIAL PRODUCT -> RR(0..55) */
           QR(56..63) -> IER_RECODE,      /* 0 -> RR(56..63) */
           QR -> QRSH,                    /* OP2 COMPLEMENTED -> QR(0..31) */
           QRSH -> QR,                    /* 0 -> QR(32..63) */
           RRSH -> QR_SHIFT_IN,
           RIGHT -> SHIFT_DIRECTION,
           LOGICAL -> SHIFT_TYPE,
           LLFC -> LFCL,
           EARLY_NOTICE -> I_UNIT;
```

## TABLE 3, cont.

```
                            /* MR, M -- 5C */
S7A: SR -> CPA1,
     CR -> CPA2,                         /* 4TH ADD */
     RRSH -> CPA3,
     CPA -> RR,                          /* FINAL PRODUCT -> RR */
     RIGHT -> SHIFT_DIRECTION,
     LOGICAL -> SHIFT_TYPE,
     LLFC -> LFCL,
     1 -> BRANCH,
     EXIT_LOOP_1B -> BRANCH_ADDRESS;

ESECT ECSB;

S8B: 0 -> RR,                   /* PRODUCT IS ZERO */
     LLFC -> LFCL,
     EARLY_NOTICE -> I_UNIT,
     1 -> BRANCH,
     EXIT_LOOP_1A -> BRANCH_ADDRESS;

                            /* MR, M -- 5C */


 CSECT ECSB;

             /* AT LEAST ONE OPERAND IS NEGATIVE */
S10B: SR -> CPA1,                    /* 4TH MULTIPLY, 3RD ADD */
      CR -> CPA2,
      RRSH -> CPA3,                  /* OP1 IN AR, 0 IN BR */
      CPA -> RR,                     /* PARTIAL PRODUCT -> RR(0..55) */
      QR(56..63) -> IER_RECODE,      /* 0 -> RR(56..63) */
      QR -> QRSH,                    /* OP2 COMPLEMENTED -> QR(0..31) */
      QRSH -> QR,                    /* 0 -> QR(32..63) */
      RRSH -> QR_SHIFT_IN,
      RIGHT -> SHIFT_DIRECTION,
      LOGICAL -> SHIFT_TYPE,
      SIGN2_TRIGGER -> BRANCH,
      $15A -> BRANCH_ADDRESS;
```

## TABLE 3, cont.

```
          /* OP1 IS NEGATIVE, OP2 IS POSITIVE */              196
$11B: SR -> CPA1,                      /* 4TH ADD */         197
      CR -> CPA2,                                             198
      RRSH -> CPA3,           /* OP1 IN AR, 0 IN BR */       199
      CPA -> RR,             /* PRELIMINARY PRODUCT -> RR */ 200
      QR(56..63) -> IER_RECODE,                              201
      RIGHT -> SHIFT_DIRECTION,  /* OP2 COMPLEMENTED IN QR(0..31) */ 202
      LOGICAL -> SHIFT_TYPE,     /* 0 IN QR(32..63) */       203
      LLFC -> LFCL,                                          204
      EARLY_NOTICE -> I_UNIT;                                205
                                                             206
$12B: QR -> CPA1,                                            207
      O -> CPA2,                                             208
      RR -> CPA3,                                            209
      CPA -> RR,                                             210
       /* THIS CYCLE MAKES AN ADJUSTMENT TO THE RESULT    */ 211
       /* BECAUSE OP1 WAS IN 2'S COMPLEMENT FORM.         */ 212
       /*                                                 */ 213
       /* LET X = ABSOLUTE VALUE OF OP1                   */ 214
       /*     Y = ABSOLUTE VALUE OF OP2                   */ 215
       /*                                                 */ 216
       /*     THE PRODUCT DESIRED IS -X*Y                 */ 217
       /*     (IN 2'S COMPLEMENT FORM, THIS IS REPRESENTED */ 218
       /*            BY 2**64 - X*Y, BUT THIS IS THE SAME */ 219
       /*            AS -X*Y BECAUSE THE RESULT REGISTER  */ 220
       /*            HAS ONLY 64 BITS)                    */ 221
       /*                                                 */ 222
       /*     BECAUSE OP1 IS REPRESENTED AS 2**32 - X,    */ 223
       /*            THE RESULT PRODUCED AT THE END OF    */ 224
       /*            THE PREVIOUS CYCLE IS                */ 225
       /*            (2**32)*Y - X*Y                      */ 226
       /*            THEREFORE, THIS CYCLE ADJUSTS THE    */ 227
       /*            PRODUCT BY SUBTRACTING (2**32)*Y     */ 228
       /*            (ACTUALLY, BY ADDING 2**64 - (2**32)*Y) */ 229
       /*                                                 */ 230
      LLFC -> LFCL,                                          231
      1 -> BRANCH,                                           232
      EXIT_LOOP_1A -> BRANCH_ADDRESS;                        233
```

18

## TABLE 3, cont.

```
                        /* MR, M -- 5C */

CSECT ECSA;

                        /* OP2 IS NEGATIVE */
$15A: SR -> CPA1,                          /* 4TH ADD */
      CR -> CPA2,
      RRSH -> CPA3,                 /* OP1 IN AR, 0 IN BR */
      CPA -> RR,                    /* PRELIMINARY PRODUCT -> RR */
      QR(56..63) -> IER_RECODE,
      RIGHT -> SHIFT_DIRECTION,     /* OP2 COMPLEMENTED IN QR(0..31) */
      LOGICAL -> SHIFT_TYPE,        /* 0 IN QR(32..63) */
      LLFC -> LFCL,
      EARLY_NOTICE -> I_UNIT,
      SIGN1_TRIGGER -> BRANCH,
      $18B -> BRANCH_ADDRESS;

             /* OP1 IS POSITIVE, OP2 IS NEGATIVE */
$16A: 0 -> CPA1,
      (AR_INV/(0..31),BR_INV/(32..63)) -> CPA2,
      RR -> CPA3,
      HOT_CARRY_63 -> ADDER_CARRY_IN,
      CPA -> RR,
        /* THIS CYCLE MAKES AN ADJUSTMENT TO THE RESULT       */
        /* BECAUSE OP2 WAS IN 2'S COMPLEMENT FORM.            */
        /*                                                    */
        /* LET X = ABSOLUTE VALUE OF OP1                      */
        /*     Y = ABSOLUTE VALUE OF OP2                      */
        /*                                                    */
        /*     THE PRODUCT DESIRED IS -X*Y                    */
        /*     (IN 2'S COMPLEMENT FORM, THIS IS REPRESENTED   */
        /*               BY 2**64 - X*Y, BUT THIS IS THE SAME */
        /*               AS -X*Y BECAUSE THE RESULT REGISTER  */
        /*               HAS ONLY 64 BITS)                    */
        /*                                                    */
        /*     BECAUSE OP2 IS REPRESENTED AS 2**32 - Y,       */
        /*               THE RESULT PRODUCED AT THE END OF    */
        /*               THE PREVIOUS CYCLE IS                */
        /*               (2**32)*X - X*Y                      */
        /*               THEREFORE, THIS CYCLE ADJUSTS THE    */
        /*               PRODUCT BY SUBTRACTING (2**32)*X     */
        /*                                                    */
      LLFC -> LFCL,
      1 -> BRANCH,
      EXIT_LOOP_1B -> BRANCH_ADDRESS;
```

TABLE 3, cont.

```
                    /* MR. M -- 5C */                          281
                                                               282
   CSECT ECSB;                                                 283
                                                               284
                  /* OP1 IS NEGATIVE, OP2 IS NEGATIVE */       285
$18B: QR -> CPA1,                                              286
      (AR_INV/(0..31),BR_INV/(32..63)) -> CPA2,                287
      RR -> CPA3,                                              288
      HOT_CARRY_63 -> ADDER_CARRY_IN,                          289
      CPA -> RR,                                               290
          /* THIS CYCLE MAKES AN ADJUSTMENT TO THE RESULT   */ 291
          /* BECAUSE OP1 AND OP2 WERE IN 2'S COMPLEMENT FORM.*/ 292
          /*                                                 */ 293
          /* LET X = ABSOLUTE VALUE OF OP1                   */ 294
          /*     Y = ABSOLUTE VALUE OF OP2                   */ 295
          /*                                                 */ 296
          /*     THE PRODUCT DESIRED IS X*Y                  */ 297
          /*                                                 */ 298
          /*     BECAUSE OP1 IS REPRESENTED AS 2**32 - X,    */ 299
          /*       AND OP2 IS REPRESENTED AS 2**32 - Y,      */ 300
          /*            THE RESULT PRODUCED AT THE END OF    */ 301
          /*            THE PREVIOUS CYCLE IS                */ 302
          /*            2**64 - (2**32)*X - (2**32)*Y + X*Y  */ 303
          /*            THEREFORE, THIS CYCLE ADJUSTS THE    */ 304
          /*            PRODUCT BY ADDING (2**32)*X (ACTUALLY,*/ 305
          /*            BY SUBTRACTING (2**32)*(-X)) AND ALSO*/ 306
          /*            ADDING (2**32)*Y                     */ 307
          /*                                                 */ 308
      LLFC -> LFCL,                                            309
      1 -> BRANCH,                                             310
      EXIT_LOOP_1A -> BRANCH_ADDRESS;                          311
                                                               312
   ENDB MR;                                                    313
```

## Claims

1. An apparatus for multiplying a first operand having a sign by a second operand having a sign, in 2's complement form, to provide a final product, comprising:

   a first register (110, 111 ) for storing the first and second operands;

   a second register (136, 137) for storing the second operand;

   means (I), coupled to the first register, for generating complements of said operands;

   means (127), coupled to the first register and the second register to receive the first operand and an increment of the second operand, for multiplying the first operand by the increment of the second operand to generate a partial sum output and a partial carry output;

   third register means (128, 129), coupled to the means for multiplying (127), for storing the partial sum output and the partial carry output;

   a result register (132, 133);

   three port adder means (130) having a first port, a second port and a third port, for adding data received at the first, second and third ports to generate a resulting sum and supplying the resulting sum to the result register (132, 133),

   the first port, second port and third port connected to receive in any given machine cycle up to three of the following data: the partial sum output from the third register (128), the partial carry output of the third register (129), the first operand, the complement of the first operand, the second operand, the complement of the second operand, the contents of the result register (132, 133) or zero;

20

control means (4), coupled to the means for multiplying (127) and the three port adder means (130), for controlling the means for multiplying (127) and the three port adder means (130) to successively generate partial sum and carry outputs and to add the partial sum and carry outputs to the contents of the result register (132, 133) to generate preliminary products in said result register, to which preliminary products adjustments may be added to form partial products in said result register, until a final partial product is generated; and

adjustment means, responsive to the sign of the first operand and of the second operand for generating an adjustment while multiplication is in progress, said adjustment being determined by a first condition (C2) in which the first operand is positive and the second operand is negative, a second condition (C3) in which the first operand is negative and the second operand is positive, and a third condition (C4) in which both the first and second operands are negative, said adjustment being added to a said preliminary product in the result register (132, 133) to form a said partial product; wherein said adjustment means includes,

means, responsive to the first condition (C2), for controlling the adder means (130) to add the complement of the first operand to the high order bits of said preliminary product,

means, responsive to the second condition (C3), for controlling the adder means (130) to add a multiple of the complement of the second operand to said preliminary product, and

means, responsive to the third condition (C4), for controlling the adder means (130) to add a multiple of the complement of the second operand to said preliminary product and to add the complement of the first operand to the high order bits of said preliminary product.

2. An apparatus according to claim 1, wherein the adjustment means generates the adjustment in a single cycle.

**Revendications**

1. Dispositif pour multiplier un premier opérande ayant un signe par un second opérande ayant un signe, sous forme ce complément à 2, pour fournir un produit final, comprenant:

un premier registre (110,111) pour mémoriser les premier et second opérandes;

un deuxième registre (136,137) pour mémoriser le second opérande;

un moyen (I), couplé au premier registre, pour générer les compléments des opérandes;

un moyen (127), couplé au premier registre et au deuxième registre pour recevoir le premier opérande et un incrément du second opérande, pour multiplier le premier opérande par l'incrément du second opérande afin de générer une somme partielle de sortie et un report partiel de sortie;

un troisième moyen à registre (128,129), couplé au moyen de multiplication (127), pour mémoriser la somme partielle de sortie et le report partiel de sortie;

un registre de résultat (132,133);

un moyen additionneur à trois portes d'accès (130) comportant une première porte d'accès, une deuxième porte d'accès et une troisième porte d'accès, pour additionner des données reçues aux première, deuxième et troisième portes d'accès afin de générer une somme résultante et de fournir la somme résultante au registre de résultat (132,133),

la première porte d'accès, la deuxième porte d'accès et la troisième porte d'accès étant connectées pour recevoir dans n'importe quel cycle de machine donné jusqu'à trois des données suivantes: la somme partielle de sortie du troisième registre (128), le report partiel de sortie du troisième registre (129), le premier opérande, le complément du premier opérande, le second opérande, le complément du second opérande, le contenu du régistre de résultat (132, 133) ou zéro;

un moyen de commande (4), couplé au moyen de multiplication (127) et au moyen additionneur à trois portes d'accès (130), pour commander le moyen de multiplication (127) et le moyen additionneur à trois portes d'accès (130) afin de générer successivement les somme et report partiels de sortie et d'additionner les somme et report partiels de sortie avec le contenu du registre de résultat (132,133) pour générer des produits préliminaires dans le registre de résultat, des réglages pouvant être ajoutés à ces produits préliminaires pour former des produits partiels dans le registre de résultat, jusqu'à ce qu'un produit partiel final soit généré; et

un moyen de réglage, réagissant au signe du premier opérande et à celui du second opérande pour générer un réglage alors qu'une multiplication est en cours, le réglage étant déterminé par une première condition (C2) dans laquelle le premier opérande est positif et le second opérande est négatif, une deuxième condition (C3) dans laquelle le premier opérande est négatif et le second opérande est positif, et une troisième condition (C4) dans laquelle les premier et second opérandes sont tous les deux négatifs, le réglage étant ajouté au produit préliminaire se trouvant dans le registre de résultat (132,133) pour former le produit partiel; dans lequel le moyen de réglage comprend:

un moyen, réagissant à la première condition (C2), pour commander le moyen additionneur (130) afin d'ajouter le complément du premier opérande aux bits de poids fort du produit préliminaire,

un moyen, réagissant à la deuxième condition (C3), pour commander le moyen additionneur (130) afin d'ajouter un multiple du complément du second opérande au produit préliminaire, et

un moyen, réagissant à la troisième condition (C4), pour commander le moyen additionneur (130) afin d'ajouter un multiple du complément du second opérande au produit préliminaire et d'ajouter le complément du premier opérande aux bits de poids fort du produit préliminaire.

2. Dispositif selon la revendication 1, dans lequel le moyen de réglage génère le réglage pendant un seul cycle.

**Ansprüche**

1. Eine Vorrichtung zum Multiplizieren eines ersten, ein Vorzeichen aufweisenden Operanden, mit einem zweiten, ein Vorzeichen aufweisenden Operanden, in Zweierkomplementform, um ein Endprodukt zu bilden, mit:

einem ersten Register (110, 111) zur Speicherung des ersten und zweiten Operanden;

einem zweiten Register (136, 137) für die Speicherung des zweiten Operanden;

einer Einrichtung (I), die mit dem ersten Register verbunden ist, für die Erzeugung von Komplementen der Operanden;

einer Einrichtung (127), die mit dem ersten und dem zweiten Register verbunden ist, um den ersten Operanden und ein Inkrement des zweiten Operanden zu empfangen, zum Multiplizieren des ersten Operanden mit dem Inkrement des zweiten Operanden, um einen partiellen Summenausgangswert und einen partiellen übertragausgangswert zu erzeugen;

einer dritten Registereinrichtung (128, 129), die mit der Einrichtung zum Multiplizieren (127) verbunden ist, für die Speicherung des partiellen Summenausgangswertes und des partiellen übertragausgangswertes;

einem Ergebnisregister (132, 133);

drei Portaddiereinrichtungen (130), die einen ersten Port, einen zweiten Port und einen dritten Port aufweisen, zum Addieren von Daten, die an dem ersten, zweiten und dritten Port empfangen werden, um eine resultierende Summe zu erzeugen, und zum Zuführen der resultierenden Summe zu dem Ergebnisregister (132, 133),

wobei der erste Port, der zweite Port und der dritte Port verbunden sind, um in jedem gegebenen Maschinenzyklus bis zu drei der folgenden Daten zu empfangen: den partiellen Summenausgangswert aus dem ersten Register (128), den partiellen übertragausgangswert aus dem dritten Register (129), den ersten Operanden, das Komplement des ersten Operanden, den zweiten Operanden, das Komplement des zweiten Operanden, die Inhalte des Ergebnisregisters (132, 133) oder Null;

einer Steuereinrichtung (4), die mit der Einrichtung zum Multiplizieren (127) und den drei Portaddiereinrichtungen (130) verbunden ist, zum Steuern der Einrichtung zum Multiplizieren (127) und der drei Portaddiereinrichtungen (130), um aufeinanderfolgend partielle Summen- und übertragausgangswerte zu erzeugen und die partiellen Summen- und übertragausgangswerte zu den Inhalten des Ergebnisregisters (132, 133) zu addieren, um vorläufige Produkte in dem Ergebnisregister zu erzeugen, zu denen Einstellwerte addiert werden können, um partielle Produkte in dem Ergebnisregister zu bilden, bis ein endgültiges partielles Produkt erzeugt ist; und

einer Einstelleinrichtung, die auf das Vorzeichen des ersten und des zweiten Operanden reagiert, zur Erzeugung

eines Einstellwertes während die Multiplikation abläuft, wobei der Einstellwert durch eine erste Bedingung (C2), in welcher der erste Operand positiv und der zweite Operand negativ ist, eine zweite Bedingung (C3), in welcher der erste Operand negativ ist und der zweite Operand positiv ist, und eine dritte Bedingung (C4), in welcher sowohl der erste als auch der zweite Operand negativ ist, bestimmt wird, wobei der Einstellwert zu einem genannten vorläufigen Produkt in dem Ergebnisregister (132, 133) addiert wird, um ein genanntes partielles Produkt zu bilden; wobei die Einstelleinrichtung enthält:

eine Einrichtung, die auf die erste Bedingung (C2) reagiert, zum Steuern der Addiereinrichtung (130), um das Komplement des ersten Operanden zu den hochwertigen Bits des vorläufigen Produkts

22

zu addieren,

eine Einrichtung, die auf die zweite Bedingung (C3) reagiert, zum Steuern der Addiereinrichtung (130), um ein Vielfaches des Komplements des zweiten Operanden zu dem vorläufigen Produkt zu addieren, und

eine Einrichtung, die auf die dritte Bedingung (C4) reagiert, zum Steuern der Addiereinrichtung (130), um ein Vielfaches des Komplements des zweiten Operanden zu dem vorläufigen Produkt zu addieren und das Komplement des ersten Operanden zu den hochwertigen Bits des vorläufigen Produkts zu addieren.

2. Eine Vorrichtung nach Anspruch 1, wobei die Einstelleinrichtung den Einstellwert in einem einzigen Zyklus erzeugt.

FIG. — 1

FIG. — 2

FIG.—3

FIG.—4